# EUROPEAN PATENT APPLICATION

(11) **EP 3 623 186 A1**
(43) Date of publication of application: **18.03.2020**
(21) Application number: 18798096.6
(22) Date of filing: 08.05.2018
(51) Int. Cl.: B60H 1/08, B60H 1/00

(54) **VEHICULAR AIR-CONDITIONING DEVICE AND FRAME BODY TO BE APPLIED THERETO**

(30) Priority: 12.05.2017 JP 2017095851
(71) Applicant: Valeo Japan Co., Ltd., Saitama 360-0193 (JP)
(72) Inventor: ARAKI, Daisuke, Kumagaya-shi Saitama 360-0193 (JP); SHICHIKEN, Yutaka, Kumagaya-shi Saitama 360-0193 (JP); YOSHIZAKI, Hisayoshi, Kumagaya-shi Saitama 360-0193 (JP)
(74) Representative: Metz, Gaëlle
(86) International application number: PCT/JP2018/017725
(87) International publication number: WO 2018/207759

(57) **Abstract**

The present disclosure has an object of providing a vehicle-use air conditioning device, and a frame body applied thereto, such that installation and removal work can be carried out easily even when a multiple of heating heat exchangers are included.

A vehicle-use air conditioning device 1 according to the invention is a vehicle-use air conditioning device including a case 10 having in an interior thereof an air passage 11 along which an airflow is caused to flow, and a multiple of heating heat exchangers 5A and 5B disposed in series with respect to the airflow, wherein the heating heat exchangers 5A and 5B are housed in a housing portion 21 provided in one frame body 20, the case 10 has a first installation/removal port 12 for installing and removing the frame body 20 in a side face 13 of the case 10, and the frame body 20 can be freely installed in and removed from the case 10 while holding the heating heat exchangers 5A and 5B.

## Description

### Technical Field

The present disclosure relates to a frame body disposed in an air passage of a vehicle-use air conditioning device after a heating heat exchanger is housed in an interior, and to a vehicle-use air conditioning device in which the frame body is disposed.

### Background Art

A frame body (also called a cassette or an adaptor) disposed in an air passage of a vehicle-use air conditioning device after a heating heat exchanger is housed in an interior, and a vehicle-use air conditioning device in which the frame body is disposed, have been disclosed (for example, refer to Patent Document 1) . In Patent Document 1, it is disclosed that a frame body (cassette) is inserted into an insertion body 3 provided in a vehicle-use air conditioning device after a heating heat exchanger is housed in the frame body, and that a multiple of heating heat exchangers of differing sizes are each housed in frame bodies (cassettes) of the same external dimensions, whereby upstream and downstream positions of the heat exchangers can easily be changed.

### Citation List

### Patent Literature

Patent Document 1: JP-A-2013-010500

### Summary of Invention

### Technical Problem

However, the technology shown in Patent Document 1 is such that as one heating heat exchanger is housed in one frame body, work of installing or removing each heating heat exchanger arises when wishing to install or remove a multiple of heating heat exchangers. In the market, there are cases in which, in order to carry out maintenance or repair, a heating heat exchanger is installed or removed in a state wherein an air conditioning device is mounted in a vehicle, but there has long been a demand to improve workability in a cramped space.

The disclosure has an object of providing a vehicle-use air conditioning device, and a frame body applied thereto, such that installation and removal work can be carried out easily even when a multiple of heating heat exchangers are included. Solution to Problem

A vehicle-use air conditioning device according to the invention is a vehicle-use air conditioning device including a case having in an interior thereof an air passage along which an airflow is caused to flow, and a multiple of heating heat exchangers disposed in series with respect to the airflow, and is characterized in that the heating heat exchangers are housed in a housing portion provided in one frame body, the case has a first installation/removal port for installing and removing the frame body in a side face of the case, and the frame body can be freely installed in and removed from the case while holding the heating heat exchangers.

The vehicle-use air conditioning device according to the invention is preferably such that the frame body has a first aperture, for inserting at least one of the heating heat exchangers in the housing portion, in one side face of side faces opposing in the direction of installation in and removal from the case of the frame body, and has a second aperture, for inserting at least one heating heat exchanger other than the heating heat exchanger inserted from the first aperture, in the other side face of the side faces opposing in the direction of installation in and removal from the case. The heating heat exchangers can be disposed in proximity to each other. Also, the frame body can be installed in and removed from the case from one direction by housing the multiple of heating heat exchangers in the frame body in advance, because of which maintainability can be improved.

The vehicle-use air conditioning device according to the invention is preferably such that a connection portion to be electrically or physically connected to the heating heat exchangers is provided on, of inner faces of the case, a side face opposing the side face in which the first installation/removal port is provided, and at least one of the heating heat exchangers is electrically or physically connected to the connection portion simultaneously with the frame body being mounted in the case. Work of installing the heating heat exchangers can be carried out more efficiently.

The vehicle-use air conditioning device according to the invention is preferably such that a connection portion to be electrically or physically connected to the heating heat exchangers is provided outside the case, and the case has a connection port for connecting at least one of the heating heat exchangers to the connection portion in a side face opposing the side face in which the first installation/removal port is provided. Work of installing the heating heat exchangers can be carried out more efficiently.

The vehicle-use air conditioning device according to the invention is preferably such that a side face of the frame body doubles as a side face of the case. A hole such as the first installation/removal port provided in the side face of the case can be more easily blocked.

The vehicle-use air conditioning device according to the invention is preferably such that the case has a second installation/removal port in a side face opposing the side face in which the first installation/removal port is provided, the second installation/removal port has a form the same as that of the first installation/removal port, and the first installation/removal port and the second installation/removal port are in a relationship of having planar symmetry. The frame body can be installed in and removed from the case through not only the first installation/removal port but also the second installation/removal port, because of which the case can be used in both a right-hand drive vehicle and a left-hand drive vehicle.

The vehicle-use air conditioning device according to the invention is such that a form wherein the heating heat exchangers are not housed in one portion of the housing portion, and an aperture of the housing portion is blocked by a cover body, is encompassed. Even when quantities of the installed heating heat exchangers differ, the case can be used for both.

A frame body according to the invention is characterized by being applied to the vehicle-use air conditioning device according to the invention.

### Advantageous Effects of Invention

According to the disclosure, a vehicle-use air conditioning device, and a frame body applied thereto, such that installation and removal work can be carried out easily even when a multiple of heating heat exchangers are included can be provided.

### Brief Description of Drawings

[Fig. 1] Fig. 1 is a schematic view showing an example of a vehicle-use air conditioning device according to an embodiment.
[Fig. 2] Fig. 2 is a schematic view showing an example of a modified form of a frame body.
[Fig. 3] Fig. 3 is a schematic view showing a second example of a vehicle-use air conditioning device according to the embodiment.
[Fig. 4] Fig. 4 is a schematic view showing a third example of a vehicle-use air conditioning device according to the embodiment.
[Fig. 5] Fig. 5 is a schematic view showing a fourth example of a vehicle-use air conditioning device according to the embodiment.

### Description of Embodiments

Hereafter, an aspect of the invention will be described with reference to the attached drawings. An embodiment described hereafter is a working example of the invention, and the invention is not limited to the following embodiment. Components having the same reference signs in the specification and the drawings are components identical to each other. Various form changes may be carried out, provided that an advantage of the invention is achieved.

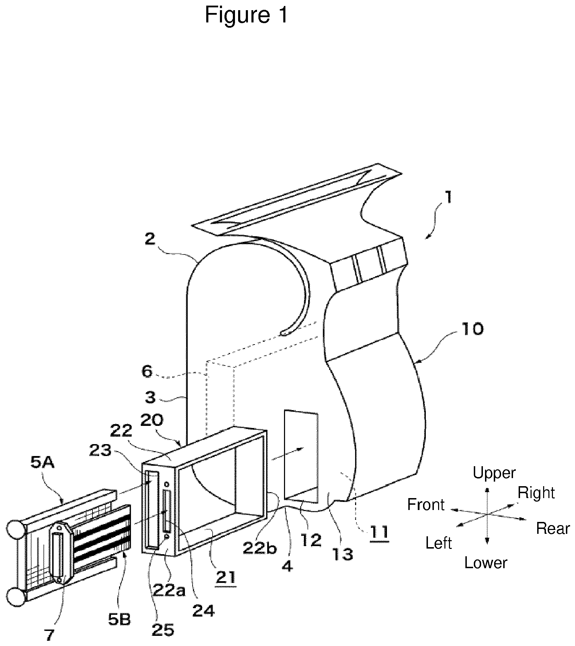

Fig. 1 is a schematic view showing an example of a vehicle-use air conditioning device according to the embodiment. A vehicle-use air conditioning device 1 according to the embodiment is a vehicle-use air conditioning device that includes a case 10 having in an interior thereof an air passage 11 along which an airflow is caused to flow, and a multiple of heating heat exchangers 5A and 5B disposed in series with respect to the airflow, wherein the heating heat exchangers 5A and 5B are housed in a housing portion 21 provided in one frame body 20, the case 10 has a first installation/removal port 12 for installing and removing the frame body 20 in a side face 13 of the case 10, and the frame body 20 can be freely installed in and removed from the case 10 while holding the heating heat exchangers 5A and 5B.

The vehicle-use air conditioning device 1 has a blower unit 2, a cooler unit 3, and a heater unit 4, forms an airflow of an appropriate temperature, and blows the airflow out into a vehicle interior. The blower unit 2 selectively takes in air from the vehicle interior and exterior, and causes the air to flow downstream. The cooler unit 3 is disposed upstream of the heater unit 4, and has a cooling heat exchanger 6. The cooling heat exchanger 6 dehumidifies and cools air as necessary. The heater unit 4 has the heating heat exchangers 5A and 5B. The heating heat exchangers 5A and 5B heat air that has passed through the cooling heat exchanger 6 as necessary, thereby forming temperature-regulated air. The temperature-regulated air is blown out into the vehicle interior from a necessary blowout port, thereby conditioning air in the vehicle interior.

The case 10 forms an outline of the blower unit 2, the cooler unit 3, and the heater unit 4, and is a housing that integrates the blower unit 2, the cooler unit 3, and the heater unit 4. The air passage 11 is formed in an internal space of the case 10. The first installation/removal port 12 for installing and removing the frame body 20 is provided in the side face 13 of the case 10. The first installation/removal port 12 is a through hole that communicates with the air passage 11. The first installation/removal port 12 is preferably provided in, of side faces of the case 10, the side face 13 (shown in Fig. 1), which is disposed on a left side of a vehicle, or a side face (not shown) disposed on a right side. When the vehicle is a right-hand drive vehicle, the first installation/removal port 12 is preferably provided in the side face 13 disposed on the left side of the vehicle. Also, when the vehicle is a left-hand drive vehicle, the first installation/removal port 12 is preferably provided in the side face disposed on the right side of the vehicle. As a space for work of installing and removing the frame body 20 is easily secured, maintainability improves.

The heating heat exchangers 5A and 5B are, for example, the hot water type heating heat exchanger 5A, the electrical heat generating type heating heat exchanger 5B, or a refrigerant type heating heat exchanger (not shown) . The hot water type heating heat exchanger 5A has engine cooling water warmed by engine-generated heat as a heating medium, and heats air by causing an exchange of heat between the engine cooling water and the air. The electrical heat generating type heating heat exchanger 5B is, for example, a PTC heater, and heats air by causing the air to pass through an electrically heated heater element. The refrigerant type heating heat exchanger is, for example, a heat pump cycle condenser, has a refrigerant as a heating medium, and heats air by causing an exchange of heat between the refrigerant and the air.

The multiple of heating heat exchangers 5A and 5B are disposed in series with respect to the airflow. Being disposed in series with respect to the airflow means that ventilation faces of all the heating heat exchangers 5A and 5B are disposed so as to intersect the airflow. The multiple of heating heat exchangers 5A and 5B are preferably disposed so that the ventilation faces thereof are parallel to each other. The case 10 can be rendered more space-saving.

Not being particularly limited, a combination of the multiple of heating heat exchangers 5A and 5B is, for example, a combination of the hot water type heating heat exchanger 5A and the electrical heat generating type heating heat exchanger 5B (shown in Fig. 1), a combination of the hot water type heating heat exchanger 5A and the refrigerant type heating heat exchanger (not shown), a combination of the refrigerant type heating heat exchanger and the electrical heat generating type heating heat exchanger 5B (not shown), or a combination of the hot water type heating heat exchanger 5A, the refrigerant type heating heat exchanger, and the electrical heat generating type heating heat exchanger 5B (not shown), along the flow of the airflow.

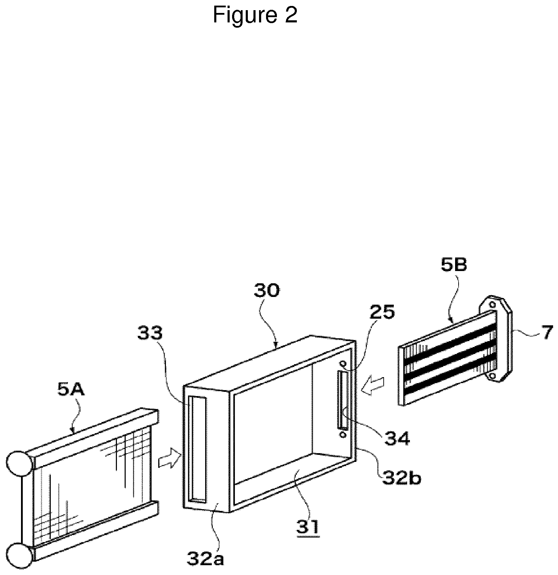

The frame body 20 according to the embodiment is applied to the vehicle-use air conditioning device 1 according to the embodiment. The frame body 20 has the housing portion 21 and a peripheral wall portion 22. The housing portion 21 is a space that can house the multiple of heating heat exchangers 5A and 5B, and is opened in a face opposing the direction of the airflow so as not to hinder ventilation in the heating heat exchangers 5A and 5B. The peripheral wall portion 22 is a frame that encloses the housing portion 21, and has an external form that can be inserted into the first installation/removal port 12. More preferably, the external form of the peripheral wall portion 22 coincides with the form of the first installation/removal port 12. Apertures 23 and 24 for inserting the heating heat exchangers 5A and 5B in the housing portion 21 are provided in at least one side face 22a of the peripheral wall portion 22 that opposes the direction of installation in and removal from the case 10. The apertures 23 and 24 are through holes that communicate with the housing portion 21. Of side faces of the frame body 20, the side face 22a in which the apertures 23 and 24 are provided is preferably the side face 22a, which is disposed on the left side of the vehicle, or a side face 22b disposed on the right side. The multiple of apertures 23 and 24 may be provided in the same side face 22a as each other (shown in Fig. 1), or provided in different side faces from each other (shown in, for example, Fig. 2). When the multiple of apertures 23 and 24 are provided in the same side face 22a as each other, the side face is preferably the side face 22a disposed on the first installation/removal port 12 side of the case 10. Routing of piping or wiring to the heating heat exchangers can be carried out through the first installation/removal port 12, and maintainability improves further. Also, it is preferable that one of the apertures 23 and 24 is provided with respect to one of the heating heat exchangers 5A and 5B. The apertures 23 and 24 are preferably provided separately for the heating heat exchangers 5A and 5B in the frame body 20, but there may be one housing portion 21 (shown in Fig. 1), or the housing portion 21 may be divided into a multiple in accordance with the apertures 23 and 24 (not shown).

The frame body 20 preferably has means of holding the heating heat exchangers 5A and 5B. The holding means is, for example, the aperture 23, which has a form that can hold the heating heat exchanger 5A, a screw hole 25, provided in the side face 22a of the peripheral wall portion 22, for fixing the heating heat exchanger 5B, or a holding piece (not shown), protruding from an inner wall face of the peripheral wall portion 22, for holding the heating heat exchangers 5A and 5B.

The frame body 20 is inserted into the air passage 11 through the first installation/removal port 12 of the case 10 while holding the heating heat exchangers 5A and 5B, thereby being mounted in the case 10. The multiple of heating heat exchangers 5A and 5B can be simultaneously disposed above the air passage 11 by this one operation. Also, the frame body 20 is removed from the case 10 while holding the heating heat exchangers 5A and 5B. The multiple of heating heat exchangers 5A and 5B can be simultaneously removed by this one operation.

Next, a modified form of the frame body 20 according to the embodiment will be described.

Fig. 2 is a schematic view showing an example of a modified form of a frame body. In a vehicle-use air conditioning device according to the embodiment, a frame body 30 preferably has a first aperture 33, for inserting at least one of the heating heat exchangers 5A and 5B in a housing portion 31, in one side face 32a of side faces 32a and 32b opposing in the direction of installation in and removal from the case 10 of the frame body 30, and has a second aperture 34, for inserting at least one heating heat exchanger 5B other than the heating heat exchanger 5A inserted from the first aperture 33, in the other side face 32b of the side faces 32a and 32b opposing in the direction of installation in and removal from the case 10, as shown in Fig. 2. For example, a heating heat exchanger may have a collar portion 7, as does the electrical heat generating type heating heat exchanger 5B shown in Fig. 2. In such a case, the heating heat exchangers 5A and 5B need to be disposed separated by an interval equivalent to the collar portion 7 when attempting to insert the heating heat exchangers 5A and 5B into the frame body 20 from the same direction, as in Fig. 1. As opposed to this, the heating heat exchangers 5A and 5B can be disposed in proximity to each other by inserting the heating heat exchangers 5A and 5B into the frame body 30 from differing directions, as shown in Fig. 2, whereby the case 10 can be further reduced in size. Also, when inserting the heating heat exchangers 5A and 5B from differing directions in the case 10 without using the frame body 30, there is a problem in that installation and removal of the multiple of heating heat exchangers 5A and 5B is carried out from a multiple of directions, and maintainability deteriorates. As opposed to this, installation and removal can be carried out from one direction with respect to the case 10 by housing the multiple of heating heat exchangers 5A and 5B in the frame body 30 in advance, because of which maintainability can be improved.

Although a form wherein there are two heating heat exchangers 5A and 5B, and there are two apertures 33 and 34, is shown as an example in Fig. 2, the invention is not limited to this. When there are three or more heating heat exchangers, a further aperture (a third aperture, a fourth aperture, and so on) is provided in either one of the side faces 32a and 32b opposing in the direction of installation in and removal from the case 10 of the frame body 30. For example, when there are three heating heat exchangers, the first aperture 33 and a third aperture (not shown) may be provided in the one side face 32a, and the second aperture 34 provided in the other side face 32b. In this case, the ventilation face of the heating heat exchanger 5B inserted from the second aperture 34 is preferably disposed between the ventilation face of the heating heat exchanger 5A inserted from the first aperture 33 and the ventilation face of the heating heat exchanger (not shown) inserted from the third aperture. All the heating heat exchangers can be disposed in proximity to each other, and the case 10 can be further reduced in size. Kinds of the heating heat exchangers 5A and 5B inserted from each aperture (for example, the first aperture 33, the second aperture 34, and the third aperture) are not particularly limited.

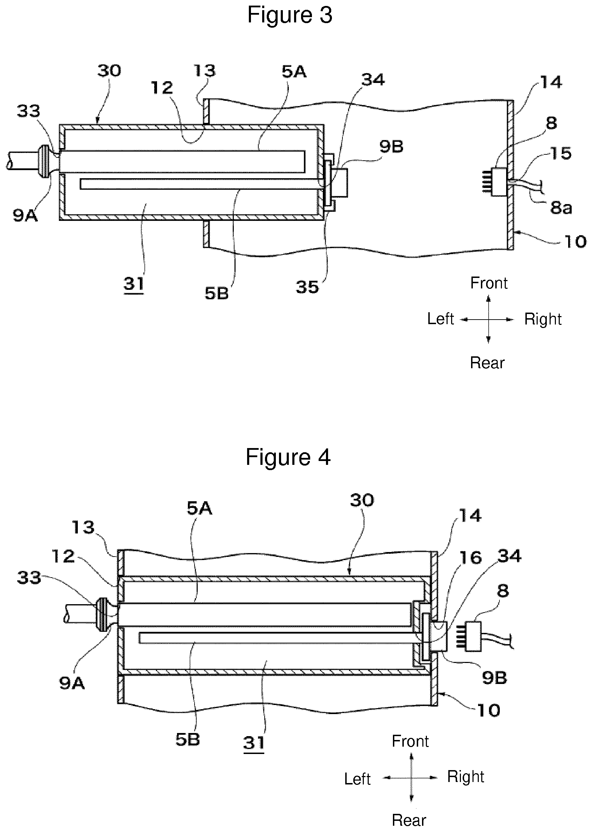

Fig. 3 is a schematic view showing a second example of a vehicle-use air conditioning device according to the embodiment. The vehicle-use air conditioning device according to the embodiment is preferably such that a connection portion 8 to be electrically or physically connected to the heating heat exchangers 5A and 5B is provided on, of inner faces of the case 10, a side face 14 opposing the side face 13 in which the first installation/removal port 12 is provided, and at least one of the heating heat exchangers 5A and 5B is electrically or physically connected to the connection portion 8 simultaneously with the frame body 30 being mounted in the case 10. Work of installing the heating heat exchangers 5A and 5B can be more efficiently carried out.

When the heating heat exchanger is the electrical heat generating type heating heat exchanger 5B, the connection portion 8 is a connector, and is electrically connected to a connector 9B of the heating heat exchanger. When the heating heat exchanger is the hot water type heating heat exchanger 5A or a refrigerant type heating heat exchanger, the connection portion 8 is a pipe joint, and is physically connected to a heating medium entrance/exit portion 9A of the heating heat exchanger. The case 10 has a through hole 15 in the side face 14, and a pipe, a wire 8a, or the like, to be connected to the connection portion 8 is preferably drawn out through the through hole 15. The heating heat exchanger connected to the connection portion 8 is preferably the electrical heat generating type heating heat exchanger 5B. When the frame body 30 is pressed into the case 10, the connector 9B of the electrical heat generating type heating heat exchanger 5B can be pressed into a connector, which is the connection portion 8.

The frame body 30 preferably has a fixing portion 35 that fixes the heating heat exchanger 5B connected to the connection portion 8. The fixing portion 35 is, for example, a claw-form projection provided on a side face of the frame body 30, as shown in Fig. 3. By the heating heat exchanger 5B being fixed to the frame body 30 by the fixing portion 35, the heating heat exchanger 5B can be removed together with the frame body 30, rather than being left still connected to the connection portion 8, when the frame body 30 is removed from the case 10.

In Fig. 3, a form such that one heating heat exchanger (the electrical heat generating type heating heat exchanger 5B in Fig. 3) is connected to the connection portion 8 simultaneously with the mounting of the frame body 30 in the case 10 is shown as an example, but the invention not being limited to this, a form may be such that a multiple of the heating heat exchangers 5A and 5B are connected to the connection portion 8 simultaneously with the mounting of the frame body 30 in the case 10 (not shown).

Fig. 4 is a schematic view showing a third example of a vehicle-use air conditioning device according to the embodiment. The vehicle-use air conditioning device according to the embodiment is preferably such that the connection portion 8 to be electrically or physically connected to the heating heat exchangers 5A and 5B is provided outside the case 10, and the case 10 has a connection port 16 for connecting at least one of the heating heat exchangers 5A and 5B to the connection portion 8 in the side face 14 opposing the side face 13 in which the first installation/removal port 12 is provided. Work of installing the heating heat exchangers 5A and 5B can be more efficiently carried out.

The connection port 16 is a through hole that communicates with the internal space of the case 10. Preferably, the connection port 16 is of a form that corresponds to a portion of the heating heat exchanger 5A or 5B to be connected to the connection portion 8, and the portion of the heating heat exchanger 5A or 5B to be connected to the connection portion 8 is drawn out to the outside of the case 10 from the connection portion 16. The portion of the heating heat exchanger 5A or 5B to be connected to the connection portion 8 is, for example, the entrance/exit portion 9A for a heating medium such as hot water or a refrigerant in the case of the hot water type heating heat exchanger 5A or a refrigerant type heating heat exchanger, and the connector 9B in the case of the electrical heat generating type heating heat exchanger 5B. In Fig. 4, a form such that one connection port 16 is provided is shown as an example, but the invention not being limited to this, a form may be such that a multiple of connection ports are provided (not shown).

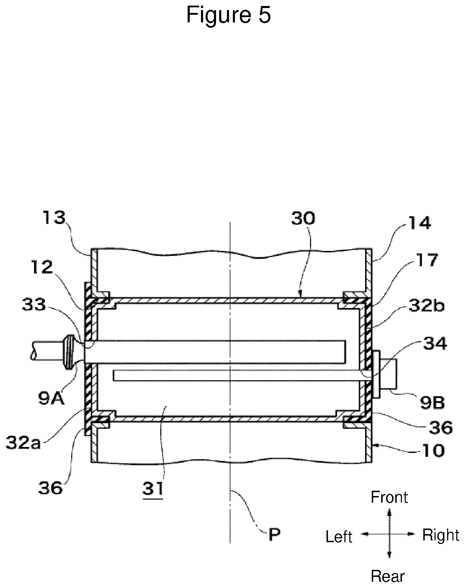

Fig. 5 is a schematic view showing a fourth example of a vehicle-use air conditioning device according to the embodiment. The vehicle-use air conditioning device according to the embodiment is preferably such that a side face of the frame body 30 doubles as a side face of the case 10. A side face of the frame body 30 doubling as a side face of the case 10 indicates a state wherein a hole such as the first installation/removal port 12 of the case provided in a side face of the case 10 is blocked by a side face of the frame body 30. A hole such as the first installation/removal port 12 provided in a side face of the case 10 can be more easily blocked, without preparing a separate cover or the like. In addition to the first installation/removal port 12, holes provided in a side face of the case 10 encompass, for example, the connection port 16 shown in Fig. 4 or a second installation/removal port 17 shown in Fig. 5.

A sealing member 36 is preferably provided in a side face of the frame body 30. A hole such as the first installation/removal port 12 provided in a side face of the case 10 can be more hermetically blocked using the sealing member 36. An elastic member of, for example, EPDM (ethylene propylene diene monomer) or NBR (nitrile butadiene rubber) is used as the sealing member 36. Also, the sealing member 36 is preferably mounted in or connected to the frame body 30 in advance. A hole such as the first installation/removal port 12 provided in a side face of the case 10 can be blocked simultaneously with the frame body 30 being mounted in the case 10. A form wherein the frame body 30 has the apertures 33 and 34 in the opposing side faces 32a and 32b respectively is shown as an example in Fig. 5, but the invention not being limited to this, a form may be such that the frame body 20 has the apertures 23 and 24 in the same side face 22a, as shown in Fig. 1.

The vehicle-use air conditioning device according to the embodiment is preferably such that the case 10 has the second installation/removal port 17 in the side face 14 opposing the side face 13 in which the first installation/removal port 12 is provided, the second installation/removal port 17 has a form the same as that of the first installation/removal port 12, and the first installation/removal port 12 and the second installation/removal port 17 are in a relationship of having planar symmetry, as shown in Fig. 5. The frame body 30 can be installed in and removed from the case 10 through not only the first installation/removal port 12 but also the second installation/removal port 17, because of which the case 10 can be used in both a right-hand drive vehicle and a left-hand drive vehicle. Being in a relationship of having planar symmetry means that the first installation/removal port 12 and the second installation/removal port 17 have planar symmetry with respect to an imaginary plane P in the case 10, parallel to the side face 13 in which the first installation/removal port 12 is provided. Also, when the frame body 30 has the apertures 33 and 34 in the opposing side faces 32a and 32b respectively, as shown in Fig. 5, the second installation/removal port 17 doubles as the connection port 16 shown in Fig. 4.

The vehicle-use air conditioning device according to the embodiment is such that the heating heat exchangers 5A and 5B need not be housed in one portion of the housing portion 21 or 31 shown in Fig. 1 to Fig. 5, and the apertures 23, 24, 33, and 34 of the housing portions 21 and 31 may be blocked by a cover body. For example, an aspect may be such that only one of the heating heat exchangers 5A and 5B is disposed, and one portion of the housing portion 21 or 31 is used in an empty state. Even when quantities of the installed heating heat exchangers 5A and 5B differ, the case 10 can be used for both. One portion of the housing portion 21 or 31 refers to one portion of spaces, among spaces of the housing portion 21 or 31, in which the heating heat exchangers 5A and 5B could be disposed when a multiple of the heating heat exchangers 5A and 5B are housed in one housing portion 21 or 31, and refers to at least one housing portion of a multiple of housing portions when a multiple of the heating heat exchangers 5A and 5B are each housed in separate housing portions.

### Reference Signs List

- 1: Vehicle-use air conditioning device
- 2: Blower unit
- 3: Cooler unit
- 4: Heater unit
- 5A, 5B: Heating heat exchanger
- 5A: Hot water type heating heat exchanger
- 5B: Electrical heat generating type heating heat exchanger
- 6: Cooling heat exchanger
- 7: Collar portion
- 8: Connection portion
- 9A: Heating medium entrance/exit portion
- 9B: Connector
- 10: Case
- 11: Air passage
- 12: First installation/removal port
- 13, 14: Case side face
- 15: Through hole
- 16: Connection port
- 17: Second installation/removal port
- 20: Frame body
- 21: Housing portion
- 22: Peripheral wall portion
- 22a, 22b: Frame body side face
- 23, 24: Aperture
- 25: Screw hole
- 30: Frame body
- 31: Housing portion
- 32a, 32b: Frame body side face
- 33: First aperture
- 34: Second aperture
- 35: Fixing portion
- 36: Sealing member

## Claims

1. A vehicle-use air conditioning device (1), comprising:
a case (10) having in an interior thereof an air passage (11) along which an airflow is caused to flow; and
a multiple of heating heat exchangers (5A, 5B) disposed in series with respect to the airflow, wherein
the heating heat exchangers (5A, 5B) are housed in a housing portion (21, 31) provided in one frame body (20, 30),
the case (10) has a first installation/removal port (12) for installing and removing the frame body (20) in a side face (13) of the case (10), and
the frame body (20, 30) can be freely installed in and removed from the case (10) while holding the heating heat exchangers (5A, 5B) .

2. The vehicle-use air conditioning device according to claim 1, wherein
the frame body (30) has a first aperture (33), for inserting at least one of the heating heat exchangers (5A, 5B) in the housing portion (31), in one side face (32a) of side faces (32a, 32b) opposing in the direction of installation in and removal from the case (10) of the frame body (30), and has a second aperture (34), for inserting at least one heating heat exchanger (5B) other than the heating heat exchanger (5A) inserted from the first aperture (33), in the other side face (32b) of the side faces (32a, 32b) opposing in the direction of installation in and removal from the case (10).

3. The vehicle-use air conditioning device according to claim 2, wherein
a connection portion (8) to be electrically or physically connected to the heating heat exchangers (5A, 5B) is provided on, of inner faces of the case (10), a side face (14) opposing the side face (13) in which the first installation/removal port (12) is provided, and
at least one of the heating heat exchangers (5A, 5B) is electrically or physically connected to the connection portion (8) simultaneously with the frame body (30) being mounted in the case (10).

4. The vehicle-use air conditioning device according to claim 2, wherein
a connection portion (8) to be electrically or physically connected to the heating heat exchangers (5A, 5B) is provided outside the case (10), and
the case (10) has a connection port (16) for connecting at least one of the heating heat exchangers (5A, 5B) to the connection portion (8) in a side face (14) opposing the side face (13) in which the first installation/removal port (12) is provided.

5. The vehicle-use air conditioning device according to claim 1 or 2, wherein
a side face of the frame body (20, 30) doubles as a side face of the case (10).

6. The vehicle-use air conditioning device according to claim 5, wherein
the case (10) has a second installation/removal port (17) in a side face (14) opposing the side face (13) in which the first installation/removal port (12) is provided,
the second installation/removal port (17) has a form the same as that of the first installation/removal port (12), and the first installation/removal port (12) and the second installation/removal port (17) are in a relationship of having planar symmetry.

7. The vehicle-use air conditioning device according to any one of claims 1 to 6, wherein
the heating heat exchangers (5A, 5B) are not housed in one portion of the housing portion (21, 31), and an aperture of the housing portion (21, 31) is blocked by a cover body.

8. A frame body applied to the vehicle-use air conditioning device (1) according to any one of claims 1 to 7.
